(19) **Europäisches Patentamt**

**European Patent Office**

**Office européen des brevets**

(11) **EP 1 031 853 A2**

(12) **EUROPÄISCHE PATENTANMELDUNG**

(43) Veröffentlichungstag:
30.08.2000 Patentblatt 2000/35

(51) Int. Cl.⁷: **G01S 13/04**, G01S 7/292

(21) Anmeldenummer: **00103099.8**

(22) Anmeldetag: **16.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.02.1999 DE 19908622**

(71) Anmelder:
**Delphi Technologies, Inc.**
**Troy, MI 48007-5052 (US)**

(72) Erfinder:
• **Gruchalski, Gerd**
**57223 Kreuztal (DE)**
• **Lindenberg, Uwe**
**58239 Schwerte (DE)**

(74) Vertreter: **Cohausz & Florack**
**Patentanwälte**
**Kanzlerstrasse 8a**
**40472 Düsseldorf (DE)**

(54) **Radarsensoren und Radarsystem zum Überwachen eines Raumes**

(57)    Die Erfindung betrifft ein Radarsystem und Radarsensoren 200', 200", 200''' zum Überwachen eines Raumes, insbesondere des Innenraumes eines Fahrzeugs. Der Erfindung liegt die Aufgabe zugrunde, die Auswertung eines empfangenen Radarsignals im Hinblick auf das Vorhandensein eines unerwünschten Objektes in dem zu überwachenden Raum zu verbessern. Diese Aufgabe wird erfindungsgemäß dadurch gelöst, daß die Radarsensoren zumindest teilweise zweikanalig ausgebildet sind, wobei der zweite Kanal die Selektion einer EMI-Störkomponente in dem empfangenen Signal ermöglicht. Mit der Kenntnis der Größe des Anteils der EMI-Störung ist eine Auswertung des Empfangssignals im Hinblick auf das Vorhandensein eines unerwünschten Objektes in dem zu überwachenden Raum zuverlässiger möglich.

Fig.1

EP 1 031 853 A2

**Beschreibung**

Die Erfindung betrifft einen ersten und zweiten Radarsensor zum Überwachen eines Raumes, insbesondere des Innenraumes eines Fahrzeugs, mit einer Antenne zum Empfangen eines Empfangssignals, welches mindestens einen ausgesendeten Impuls nach dessen Reflektion in dem zu überwachenden Raum repräsentiert, mit einer Selektionseinrichtung zum Selektieren eines ersten Signalabschnittes aus dem Empfangssignal, beginnend ab einer Zeit T1, zu welcher der Empfang des Impulses nach dessen Aussendung erwartet wird und mit einer Auswerteeinrichtung zum Auswerten des ersten Signalabschnitts daraufhin, ob er eine Störung aufgrund eines Objektes in dem Raum aufweist.

Die Erfindung betrifft weiterhin einen dritten Radarsensor zum Überwachen eines Raumes mit mindestens einer Antenne zum Empfangen eines analogen Empfangssignals, welches eine hochfrequente Impulsfolge nach deren Aussendung und Reflektion in dem zu überwachenden Raum repräsentiert, mit einer ersten Selektionseinrichtung zum Erzeugen eines hochfrequenten ersten Abtastsignals durch Abtasten des Empfangssignals zu Zeitpunkten T1i, zu welchen jeweils der Empfang eines Impulses der Impulsfolge erwartet wird, und mit einer Auswerteeinrichtung zum Bilden einer Hüllkurve des ersten Abtastsignals und zum Auswerten der Hüllkurve im Hinblick darauf, ob sie Störungen aufweist, welche auf ein unbefugtes Objekt in dem zu überwachenden Raum zurückgehen.

Die Erfindung betrifft schließlich ein Radarsystem zum Überwachen eines Raumes mit einem Radarsensor zum Aussenden mindestens eines Impulses über eine Sendeantenne in den zu überwachenden Raum und mit einem der oben beschriebenen Radarsensoren.

Derartige Radarsensoren und Radarsysteme sind im Stand der Technik, z.B. aus der EP 0 787 998 A2 bekannt.

Das dort offenbarte Mikrowellen-Sensorsystem für die Überwachung von Räumen umfaßt einen Sender zum Abstrahlen von Mikrowellen-Sendeimpulsen und einen Empfänger für den Empfang der in dem überwachten Raumbereich reflektierten Sendeimpulse. Das System umfaßt weiterhin eine Abtasteinrichtung mittels welcher aus den empfangenen Sendeimpulsen zu vorgebbaren Zeiten Abtastwerte gewonnen werden. Anstelle der Auswertung einzelner Abtastwerte wird vorgeschlagen, den Sendeimpuls mehrfach zu wiederholen und eine Auswertung des Empfangssignals auf Basis von dessen Tiefpaßanteil, repräsentiert durch eine Hüllkurve, durchzuführen.

Die Auswertung des Empfangssignals ermöglicht die Bestimmung von Objekten in dem zu überwachenden Raum zwischen einem vorgebbaren Mindestwert und einem vorgebbaren Maximalwert des Abstandes zum Empfänger.

Das allgemeine Ziel von Systemen zur Überwachung von Räumen ist das Erfassen von unbefugten Objekten in diesen Räumen. Die bekannten Radarsysteme machen sich den Effekt zu Nutze, daß die unbefugten Objekte Störungen in einem Radarempfangssignal verursachen, welche erkennbar sind.

Das Empfangssignal bei einem Radarsystem zur Überwachung von Räumen wird allerdings nicht nur durch das Objekt gestört, sondern zusätzlich auch durch elektromagnetische Interferenz EMI. Dabei handelt es sich um Störeinstrahlung elektromagnetischer Wellen, wie sie z.B. von Handys erzeugt wird. Derartige EMI-Störungen können sehr ähnliche Veränderungen/Störungen des Empfangssignals bewirken, wie sie durch Objekte, wie z.B. Bewegungen menschlicher Körperteile, in dem zu überwachenden Raum in dem Empfangssignal verursacht würden.

Das grundsätzliche Erkennen einer Störung des Empfangssignals durch eine Auswertung desselben muß deshalb nicht zwangsläufig bedeuten, daß sich tatsächlich ein unbefugtes Objekt in dem zu überwachenden Raum befindet; vielmehr kann die erkannte Störung auch allein durch EMI hervorgerufen sein. Während in dem erstgenannten Fall die Auslösung eines Alarms erwünscht ist, wäre sie in letztgenanntem Fall, d.h. bei alleiniger Störung des Empfangssignals aufgrund von EMI unerwünscht und würde einen Fehlalarm bedeuten.

Es ist daher die Aufgabe der Erfindung, einen Radarsensor und ein Radarsystem der eingangs genannten Art in der Weise weiterzubilden, daß sie eine zuverlässigere Entscheidung über das Vorhandensein eines (unbefugten) Objektes in den zu überwachenden Raum ermöglichen.

Diese Aufgabe wird durch die Gegenstände der Patentansprüche 1, 6 und 11 gelöst.

Allen genannten Lösungen liegt das Prinzip zugrunde, den Störanteil in einem Empfangssignal, welcher alleine durch EMI verursacht wird, zu selektieren und in seinem Umfang zu bewerten oder abzuschätzen. Die Kenntnis über die Größe dieses Störanteils erlaubt vorteilhafterweise eine zuverlässigere Auswertung des Empfangssignals im Hinblick auf das Vorhandensein eines (unbefugten) Objektes in dem zu überwachenden Raum.

Gemäß Patentanspruch 1 wird die Aufgabe für den eingangs genannten ersten Radarsensor dadurch gelöst, daß die Selektionseinrichtung weiterhin ab einer Zeit T2 mit T2 > T1 nach dem Aussenden des Impulses einen zweiten Signalabschnitt aus dem Empfangssignal selektiert, welcher im wesentlichen nur noch einen EMI-Anteil in dem Empfangssignal repräsentiert und daß die Auswerteeinrichtung weiterhin durch Auswerten des zweiten Signalabschnitts die Größe des EMI-Anteils in dem Empfangssignal abschätzt und unter Berücksichtigung der Größe des EMI-Anteils die Auswertung des ersten Signalabschnitts durchführt.

Neben dem oben genannten allgemeinen Vorteil zeichnet sich dieser Radarsensor dadurch aus, daß er lediglich einen Empfangskanal, bestehend aus einer Antenne, einer Selektionseinrichtung und einer Auswerteeinrichtung, umfaßt, aber das Empfangssignal zu unterschiedlichen Zeiten T1 und T2 betrachtet und auswertet.

Gemäß einem ersten Ausführungsbeispiel des ersten Radarsensors ist T2 so gewählt, daß zu dieser Zeit der Empfang des ersten zur Zeit T1 detektierten Impulses durch den Radarsensor beendet ist, aber der Empfang eines nachfolgenden Impulses noch nicht begonnen hat. Dies hat den Vorteil, daß der zweite Signalabschnitt keine Amplitudenanteile mehr von dem ausgesendeten und empfangenen ersten Impuls beinhaltet und außerdem auch keine Störanteile eines eventuell in dem zu überwachenden Raum vorhandenen Objektes mehr beinhaltet. Vielmehr wird durch diese Bedingung sichergestellt, daß der zweite Signalabschnitt im wesentlichen nur noch einen EMI-Anteil des Empfangssignals repräsentiert, sofern derartige EMI-Störungen überhaupt auftreten. Diese Bedingung ist vorteilhaft, aber nicht notwendig für die Realisierung des Radarsensors.

Zur Auswertung des zweiten Signalabschnitts ist es vorteilhaft, dessen Amplitude oder dessen Verlauf heranzuziehen. Beide Charakteristika gestatten eine Auswertung mit einfachen Mitteln.

Besonders einfach ist ein Vergleich der mittleren Amplitude des zweiten Signalabschnitts mit einem vorbestimmten Schwellenwert.

Es ist vorteilhaft, daß die Zeitdauer des ersten oder zweiten Signalabschnitts in Grenzen variabel bestimmbar ist. Allgemein gilt: Größere Zeitdauern der Signalabschnitte sind mit preiswerteren elektronischen Schaltungen realisierbar als kürzere Zeitdauern. Die Grenzen für die zeitliche Dauer der einzelnen Signalabschnitte werden dabei insbesondere durch den Abstand zwischen den Zeitpunkten T1 und T2 definiert. Die Aufgabe wird weiterhin durch einen zweiten Radarsensor der eingangs genannten Art gelöst, bei welchem eine zweite Selektionseinrichtung ab einer Zeit T2 mit T2 > T1 nach dem Aussenden des Impulses einen zweiten Signalabschnitt aus dem Empfangssignal selektiert, welcher im wesentlichen nur noch einen EMI-Anteil im Empfangssignal repräsentiert und bei welchem die Auswerteeinrichtung durch Auswerten des zweiten Signalabschnitt die Größe des EMI-Anteils in dem Empfangssignal abschätzt und unter Berücksichtigung dieser Größe die Auswertung des ersten Signalabschnitts vornimmt. Im Unterschied zu dem oben genannten ersten Radarsensor zeichnet sich dieser Radarsensor durch zwei getrennte Empfangskanäle aus, wobei ein erster Empfangskanal zur Selektion des ersten Signalabschnitts und ein zweiter Empfangskanal zur Selektion des zweiten Signalabschnitts dient.

Dies hat gegenüber einer einkanaligen Ausbildung des Radarsensors den Vorteil, daß die schaltungstechnischen Anforderungen an die Selektionseinrichtungen wesentlich geringer sind und damit die Kosten für den Radarsensor reduziert werden können.

Eine weitere Einsparung von Kosten kann durch das Vorsehen nur einer Gemeinschaftsantenne für beide Selektionseinrichtungen erzielt werden. Andererseits ist es selbstverständlich auch möglich, für beide Selektionseinrichtungen getrennte Empfangsantennen vorzusehen.

Weitere vorteilhafte Ausgestaltungen des zweiten Radarsensors hinsichtlich der Wahl der Zeit T2 und der Auswertung der Signalabschnitte entsprechen den oben beschriebenen Ausführungsbeispielen zu dem ersten Radarsensor.

Die Aufgabe der Erfindung wird weiterhin dadurch gelöst, daß bei dem dritten Radarsensor der eingangs genannten Art eine zweite Selektionseinrichtung zum Erzeugen eines hochfrequenten zweiten Abtastsignals auf Basis von Abtastzeitpunkten $T2i > T1i$ vorgesehen ist, wobei das zweite Abtastsignal im wesentlichen nur einen EMI-Anteil in dem Empfangssignal repräsentiert und wobei die Auswerteeinrichtung die Hüllkurve des zweiten Abtastsignals bildet, anhand dieser die Größe des EMI-Anteils in dem Empfangssignal abschätzt und das erste Abtastsignal unter Berücksichtigung der Größe des EMI-Anteils auswertet.

Neben dem oben genannten allgemeinen Vorteil der größeren Zuverlässigkeit bei der Bestimmung von unbefugten Objekten in dem zu überwachenden Raum zeichnet sich der dritte Radarsensor dadurch aus, daß er anstelle der einzelnen Signalabschnitte oder Abtastwerte nur Hüllkurven betrachtet und auswertet. Die Hüllkurven repräsentieren einen Tiefpaßanteil der zu den Zeiten T1 und T2 ausgewerteten Empfangssignale und bilden gleichzeitig eine Integration über eine Vielzahl von einzelnen Abtastwerten.

Wie oben bereits angedeutet, ist die Auswertung einer Vielzahl hochfrequenter Abtastwerte nur mit sehr hohen Kosten realisierbar, während die Auswertung von Hüllkurven auch mit preiswerteren elektronischen Schaltungen möglich ist.

Auch für diesen dritten Radarsensor ist es vorteilhaft, daß die Abtastzeitpunkte T1i und T2i beide innerhalb einer Periode T zwischen zwei aufeinanderfolgenden Impulsen liegen und daß der Empfang des Impulses $n_i$ durch den Radarsensor zum Zeitpunkt T2i beendet ist, aber der Empfang eines nachfolgenden Impulses $n_{i+1}$ der Impulsfolge noch nicht begonnen hat. Diese Einschränkung für die Wahl des Abtastzeitpunktes T2i verhindert, daß in dem zweiten Signalabschnitt unerwünschte Störkomponenten, z.B. von einem unbefugten Objekt in dem zu überwachenden Raum, enthalten sind und bewirkt, daß der zweite Signalabschnitt im wesentlichen nur noch EMI-Störanteile umfaßt, sofern diese überhaupt vorhanden sind. Diese Bedingung ist vorteilhaft, aber nicht notwendig für die Realisierung des Radarsensors.

Es ist weiterhin vorteilhaft, wenn die Auswerteeinrichtung einen Mikroprozessor zum Auswerten der einzelnen Hüllkurven nach einem vorbestimmten Algorithmus aufweist. Der Mikroprozessor ermöglicht in Zusammenarbeit mit einem ihm zugeordneten Speicher die Realisierung einer Vielzahl von Auswertealgorithmen und einer Auswahl derselben in Abhängigkeit von dem jeweils vorliegenden Einzelfall.

Ein besonders einfacher Algorithmus sieht z.B. einen Vergleich der Amplitude eines einzelnen Abtastwertes der Hüllkurve mit einem vorgegebenen Schwellenwert vor. Alternativ oder ergänzend dazu ist auch die Auswertung eines lokalen Verlaufs der Hüllkurve von mindestens einem der beiden Signalabschnitte auf Basis mehrerer Abtastwerte möglich. Die Analyse des lokalen Verlaufs z.B. durch Vergleich mit in einem Speicher der Auswerteeinrichtung hinterlegten Referenzverläufen ermöglicht eine differenzierte Bewertung der Hüllkurven.

Die Aufgabe wird weiterhin durch ein Radarsystem zum Beobachten eines Raumes, insbesondere des Innenraums eines Fahrzeugs gelöst, welches einen Radarsender zum Aussenden mindestens eines Impulses über eine Sendeantenne in den zu überwachenden Raum und einen der oben genannten Radarsensoren aufweist.

Für dieses Radarsystem gelten die gleichen Vorteile, wie sie oben für die verschiedenen Radarsensoren aufgeführt worden sind.

Gemäß einem ersten speziellen Ausführungsbeispiel ist es vorteilhaft, wenn der Radarsender einen Pulsgenerator zum Erzeugen von mindestens einem Gatterimpuls und einen Nadelimpulsgenerator zum Erzeugen von Nadelimpulsen, getriggert durch den Gatterimpuls, aufweist, wobei die Nadelimpulse über die Sendeantenne ausgesendet werden.

Der Pulsgenerator erzeugt den Gatterimpuls oder eine Folge von Gatterimpulsen, deren jeweilige Breite zu groß ist, als daß sie energiesparend über die Sendeantenne abgestrahlt werden könnten. Zum Erzeugen geeigneter Sendeimpulse dient der Nadelimpulsgenerator, welcher, getriggert durch die Impulse des Pulsgenerators, Impulse mit einer wesentlich kleineren Breite und damit einer höheren Frequenz erzeugt, die für Aussendung über eine Sendeantenne geeignet sind.

Es ist weiterhin vorteilhaft, wenn die Selektions- oder Abtasteinrichtungen der Radarsensoren so getriggert werden, daß sie genau zu den Zeiten T1 und T2 das Empfangssignal abtasten. Dies wird durch eine Synchronisation zwischen dem Radarsender und dem Radarsensor erreicht, indem zwischen diesen beiden Komponenten Verzögerungs- und Triggereinrichtungen vorgesehen sind.

Es folgt nun eine detaillierte Beschreibung bevorzugter Ausführungsbeispiele der Erfindung unter Bezugnahme auf die beigefügten Figuren. Dabei zeigen

Fig. 1    ein Radarsystem mit einem Radarsensor und einem Radarsensor gemäß einem ersten Ausführungsbeispiel der vorliegenden Erfindung,

Fig. 2    die Signalverläufe für alle Radarsensoren und ein Radarsystem gemäß der vorliegenden Erfindung,

Fig. 3    eine Überwachungshülle für den Innenraum eines Fahrzeugs,

Fig. 4    Überwachungshüllen für den Innen- und Außenraum eines Fahrzeugs,

Fig. 5    einen Radarssender und einen Radarsensor gemäß einem zweiten bevorzugten Ausführungsbeispiel der Erfindung,

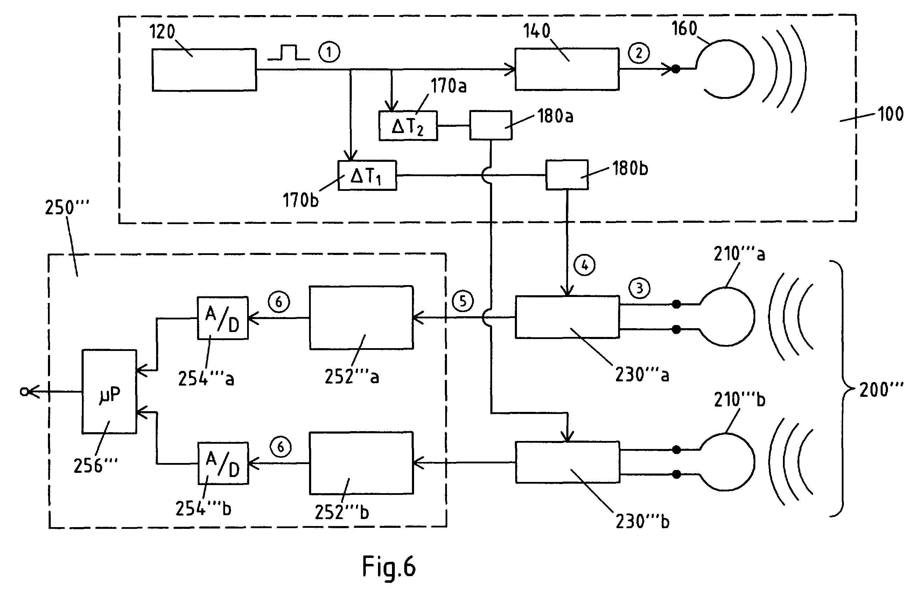

Fig. 6    einen Radarsender und einen Radarsensor gemäß einem dritten Ausführungsbeispiel der Erfindung, und

Fig. 7    einen typischen Verlauf für ein aufbereitetes Empfangssignal, welcher das Vorhandensein eines (unbefugten) Objektes in dem zu überwachenden Raum erkennen läßt.

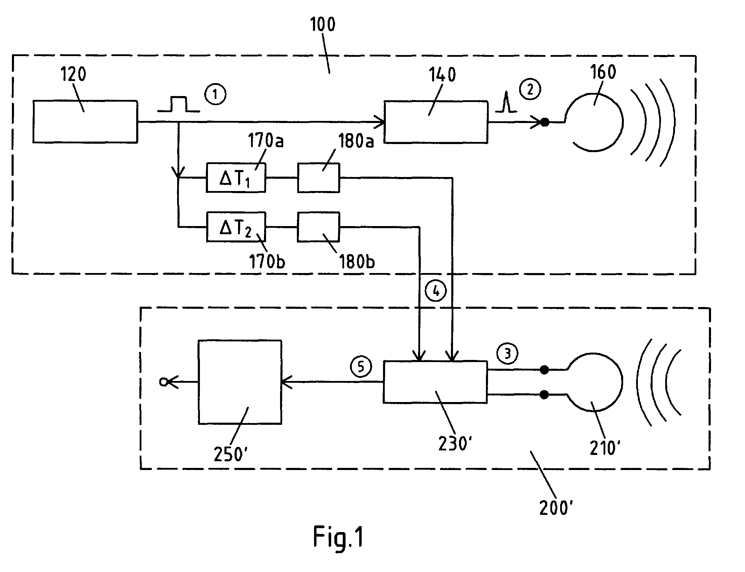

Fig. 1 zeigt ein Radarsystem zum Überwachen eines Raumes, insbesondere des Innenraumes eines Fahrzeugs. Das Radarsystem umfaßt einen Radarsender 100 und einen Radarsensor 200'.

Der Radarsender 100 umfaßt hintereinander in Reihe geschaltet einen Pulsgenerator 120, einen Nadelimpulsgenerator 140 sowie eine Sendeantenne 160. Der Ausgang des Pulsgenerators 120 ist weiterhin auf zwei eingangsseitig parallel geschaltete Verzögerungseinrichtungen 170a, 170b geschaltet, wobei die erste Verzögerungseinrichtung 170a das Ausgangssignal des Pulsgenerators 120 um die Zeit ΔT1 und die zweite Verzögerungseinrichtung 170b den Ausgang des Pulsgenerators 120 um die Zeit ΔT2 verzögert. Der ersten Verzögerungseinrichtung 170a ist eine erste Triggereinrichtung 180a nachgeschaltet, welche zur Zeit ΔT1 nach Aussenden eines Impulses durch den Pulsgenerator 120 an ihrem Ausgang einen ersten Triggerimpuls bereitstellt. Analog dazu ist der zweiten Verzögerungseinrichtung 170b eine zweite Triggereinrichtung 180b nachgeschaltet, welche zur Zeit ΔT2 nach Aussenden eines Impulses durch den Pulsgenerator 120 einen zweiten Triggerimpuls bereitstellt.

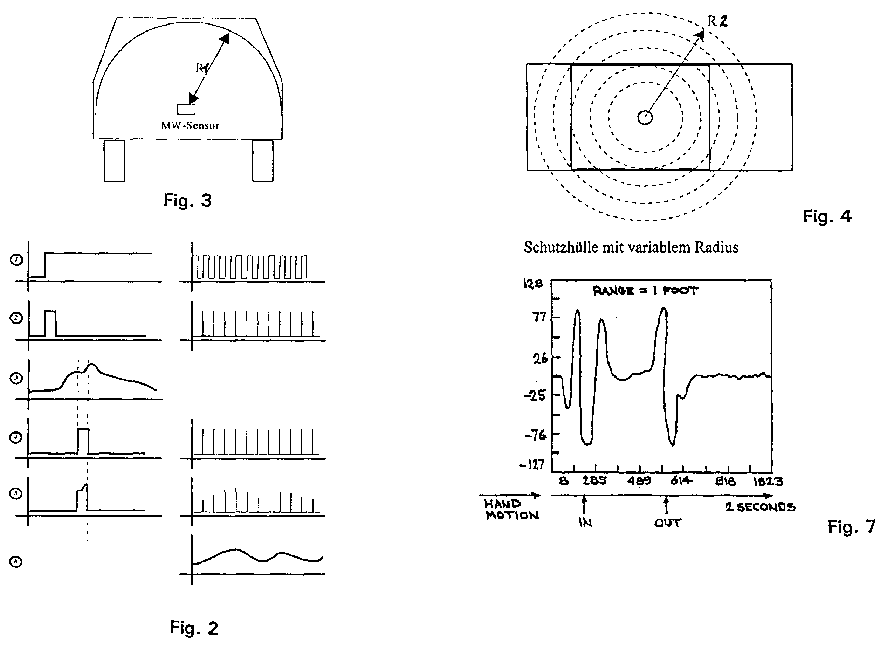

Die Funktionsweise des Radarsenders 100 wird nachfolgend anhand von Fig. 1 und der Zeilen 1 und 2 in Fig. 2 verdeutlicht:

Der Pulsgenerator 120 erzeugt eine Impulsfolge mit einer Periodendauer von beispielsweise 250 KHz, entsprechend 4 Mikrosekunden. Dabei beträgt die Pulsbreite eines Pulses ca. 2 Mikrosekunden. Eine derartige Impulsfolge ist in Fig. 2, Zeile 1, rechte Abbildung, dargestellt. Links daneben ist ein Einzelimpuls der Impulsfolge mit einer wesentlich größeren zeitlichen Auflösung abgebildet. Die von dem Pulsgenerator 120 erzeugte Impulsfolge wird auf den Eingang des Nadelimpulsgenerators 140 gegeben, welcher, z.B. flankengetriggert durch die Impulsfolge an seinem Eingang, an seinem Ausgang Nadelimpulse mit einer Pulsbreite von ca. 170 Picosekunden bereitstellt. Eine derartige Nadelimpulsfolge ist in der zweiten Zeile der rechten Abbildung in Fig. 2 dargestellt. Sie wird über die Sendeantenne 160 in den zu überwachenden Raum abgestrahlt. Die linke Abbildung in Zeile 2 von Fig. 2 zeigt einen einzelnen Nadelimpuls. Ein Vergleich der linken Abbildungen in Zeile 1 und Zeile 2 soll die unterschiedliche Pulsbreite zwischen einem Impuls am Ausgang des Pulsgenerators 120 und einem Impuls am Ausgang des Nadelimpulsgenerators 140 verdeutlichen.

Der soeben beschriebene Radarsender 100 wird einheitlich bei dem erfindungsgemäßen Radarsystem mit den verschiedenen nachfolgend beschriebenen Ausführungsformen des Radarsensors betrieben.

Fig. 1 zeigt weiterhin ein erstes Ausführungsbeispiel des erfindungsgemäßen Radarsensors 200'. Er besteht im wesentlichen aus einer Reihenschaltung einer Empfangsantenne 210', einer Selektionseinrichtung 230' und einer Auswerteeinrichtung 250'. Das von der ersten Triggereinrichtung 180a erzeugte erste Triggersignal und das von der zweiten Triggereinrichtung 180b erzeugte zweite Triggersignal werden der Selektionseinrichtung 230' als Eingangssignale zugeführt.

Nachfolgend wird die Funktionsweise des Radarsensors 200' gemäß dem ersten Ausführungsbeispiel der Erfindung unter Bezugnahme auf Fig. 1 und auf die Zeilen 2 bis 5 in Fig. 2 erläutert.

Die Empfangsantenne 210' empfängt ein Empfangssignal, von welchem ein Impuls in Zeile 3 von Fig. 2 dargestellt ist.

Diese Abbildung repräsentiert einen von der Sendeantenne 160 ausgesendeten Impuls nach dessen Übertragung durch den zu überwachenden Raum, wobei er während der Übertragung zum einen durch elektromagnetische Interferenz EMI und ggf. zusätzlich durch Reflektion an einem unerwünschten Objekt in dem zu überwachenden Raum verzerrt worden sein kann. Das in Zeile 3 gezeigte Empfangssignal beinhaltet also unter Umständen einen durch EMI und durch ein unerwünschtes Objekt gestörten Impuls.

An dieser Stelle ist es besonders wichtig, auf die zeitlichen Dimensionen in den Abbildungen in Fig. 2 nochmals hinzuweisen. Das in Zeile 3 gezeigte Empfangssignal basiert auf einem Sendeimpuls mit einer Pulsbreite von ca. 170 ps, angedeutet durch die beiden parallelen vertikalen gestrichelten Linien. Aufgrund der Übertragung durch den zu überwachenden Raum und aufgrund der ggf. dort erfahrenen Störungen wird der gemäß Fig. 2, Zeile 2, linke Abbildung, ausgesendete Impuls zeitverzögert und verzerrt über einen etwas größeren Zeitraum empfangen. Dieser Zeitraum, während dessen der verschwommene Impuls gemäß Fig. 2, 3. Zeile, empfangen wird, ist aber in jedem Falle einige Zehnerpotenzen kleiner als der zeitliche Abstand zu dem nächsten nachfolgend empfangenen Impuls. Der Abstand zwischen zwei benachbarten Impulsen in dem Empfangssignal entspricht der Periodendauer der ausgesendeten Impulsfolge der rechten Abbildungen in Zeile 1 und 2 in Fig. 2 und beträgt beispielsweise 4 Mikrosekunden.

Das Empfangssignal gemäß Zeile 3 in Fig. 2 wird von der Empfangsantenne 210' an die ihr nachgeschaltete Selektionseinrichtung 230' weitergeleitet. Die Empfangseinrichtung 230' selektiert, getriggert durch den ersten Triggerimpuls, d.h. beginnend ab einer Zeit T1, einen ersten Signalabschnitt aus dem Empfangssignal. Dabei ist die Zeit T1 so gewählt, daß sie der Laufzeit eines von der Sendeantenne 160 ausgesendeten Impulses mit konstanter Lichtgeschwindigkeit durch den zu überwachenden Raum unter Berücksichtigung einer Reflektion entspricht.

Fig. 3 dient zur Veranschaulichung der Berechnung von T1. In Fig. 3 ist ein Fahrzeug gezeigt, dessen Innenraum mit Hilfe des erfindungsgemäßen Radarsystems überwacht werden soll. Radarsender und Radarsensor sind zu diesem Zweck eng benachbart zentriert an der Innenseite des Bodens des Fahrzeugs, z.B. in der Mittelkonsole, angeordnet. Der Radarsender 100 funktioniert dabei als Kugelstrahler, welcher radial Impulsfolgen in den zu überwachenden Innenraum aussendet. Die ausgesendeten Signale werden zumindest teilweise von den Wänden des Innenraumes reflektiert und treffen dann auf die Empfangsantenne 210' des Radarsensors 200'. Zur Auswertung des derartig erzeugten Empfangssignals wird zunächst eine erste fiktive Überwachungshülle, eine sog. "Shell", definiert, welche einen in den Innenraum des Fahrzeugs eingeschriebenen Kreis mit einem entsprechenden Radius R1 repräsentiert. Weil sich die von der Sendeantenne 160 ausgesendeten Impulse mit konstanter Lichtgeschwindigkeit in dem zu überwachenden Raum ausbreiten, läßt sich bei bekanntem Radius R1 die Zeitdauer T1, welche ein Impuls nach seiner Aussendung für die Zurücklegung der Strecke Sendeantenne - erste Shell, d.h. Fahrzeugwand mit dortiger Reflektion - Radarsensor benötigt, berechnen: sie beträgt $T1 = 2 \times R1/c$, wobei c die Lichtgeschwindigkeit ist.

Die soeben anhand des ersten Radarsensors erläuterte Berechnung von T1 gilt in analoger Weise auch für den weiter unten beschriebenen zweiten und dritten Radarsensor. Es wird nachfolgend die Funktionsweise des ersten Radarsensors weiter beschrieben.

Der durch die Selektionseinrichtung 230' gebildete Ausschnitt aus dem Empfangssignal gemäß Zeile 3 in Fig. 2 ist in Zeile 5 von Fig. 2 dargestellt, wobei die linke Abbildung einen einzelnen ersten Signalabschnitt und die rechte Abbildung eine Folge von Signalabschnitten repräsentiert. Ein einzelner erster Signalabschnitt wird aus einem empfangenen Impuls gemäß Zeile 3 in Fig. 2 dadurch gebildet, daß die Selektionseinrichtung 230', beginnend ab der Zeit T1, zu welcher der Empfang eines Impulses gemäß obiger Berechnung nach seiner Aussendung erwartet werden kann, für eine gewisse Zeit, z.B. 200 ps an ihren Ausgang durchschaltet.

Danach ignoriert die Selektionseinrichtung 230' zunächst das von der Empfangsantenne 210' empfangene Empfangssignal, bis sie erneut, diesmal durch das zweite Triggersignal, getriggert wird. Dieser Vorgang wird nachfolgend beschrieben:

Wie oben erläutert, liegen zwei aufeinanderfolgende Empfangsimpulse gemäß Zeile 3 in Fig. 2 zeitlich sehr weit auseinander, zumindest wenn man ihren zeitlichen Abstand zu ihrer jeweiligen Breite in Relation setzt; wie erläutert, liegt die Periodendauer beispielsweise bei 4 Mikrosekunden, während die Breite eines Empfangsimpulses typischerweise deutlich unter einer Nanosekunde liegt. Dies hat zur Folge, daß, zumindest bei ungestörter Übertragung, das zwischen zwei aufeinanderfolgenden Empfangssignal, d.h. der zweite Signalabschnitt, eine Amplitude von 0 aufweist.

Andererseits kann eine von 0 abweichende Amplitude in dem Empfangssignal zwischen zwei aufeinanderfolgenden Impulsen ein deutliches Indiz für das Vorliegen einer Störung in Form von EMI sein, was nachfolgend unter Zuhilfenahme von Fig. 4 veranschaulicht werden soll.

Die von der Sendeantenne 160 ausgesendeten Impulse werden, wie oben beschrieben, unmittelbar nach der Zeit T1 von dem Radarsensor 200' empfangen, wenn sie an der ersten Shell mit dem Radius R1 reflektiert worden sind. Ein kugelförmig ausgesendeter Impuls wird jedoch nicht vollständig an der ersten Shell reflektiert, sondern einige Anteile können auch an weiteren Shells mit größeren Radien, die auch außerhalb des Fahrzeugs liegen können, wie dies in Fig. 4 durch den Radius R2 veranschaulicht ist, reflektiert werden. Dies gilt insbesondere dann, wenn man bedenkt, daß die Radarstrahlung z.B. Fensterscheiben durchdringen kann. Die in einer Entfernung von R2 von dem Radarsender reflektierten Strahlung wird zu einer Zeit T2 mit $T2 = 2 \times R2/C$ von dem Radarsensor 200' empfangen. Dabei ist zu beachten, daß die Energie der Strahlung zum einen in Abhängigkeit der Weglänge und zum anderen aufgrund der erfahrenen Reflektion exponentiell abnimmt, so daß die Amplitude eines zur Zeit T2 mit T2 > T1 empfangenen Signals wesentlich geringer ist als die Amplitude eines Signals oder Signalabschnitts, welches zu einer Zeit T1 nach der Aussendung eines Impulses empfangen wird.

Aufgrund dieser Beschreibung ist verständlich, daß die Amplitude eines empfangenen Impulses exponentiell abnimmt, wie dies in Zeile 3 in Fig. 2 angedeutet ist.

Diese Situation bei einer ungestörten Übertragung läßt umgekehrt den Schluß zu, daß bei einer z.B. durch EMI gestörten Übertragung, das Signal, d.h. insbesondere dessen Amplitude und dessen Verlauf, eine gegenüber der ungestörten Übertragung charakteristische Abweichung erfahren. Dies rührt insbesondere daher, daß EMI-Störungen auf aktive Strahler, wie z.B. Handys zurückgehen, deren Strahlung wesentlich energiereicher ist, als die nach einer Reflektion in großer Entfernung empfangene Strahlung. Aus diesem Grunde ermöglicht eine Auswertung des Empfangssignals zur Zeit T2 mit T2 > T1 und T2 kleiner als die Periodendauer des Sendesignals, eine Analyse des Empfangssignals im Hinblick auf das Vorliegen einer EMI-Störung.

Genau auf diesem Prinzip basiert die Funktionsweise der Selektionseinrichtung 230', welche das Empfangssignal nicht nur, wie oben beschrieben, zur Zeit T1 abtastet, sondern auch getriggert durch das zweite Triggersignal, beginnend ab der Zeit T2 einen zweiten Signalabschnitt aus dem Empfangssignal selektiert. Wie oben erläutert, repräsentiert dieser zweite Signalabschnitt im wesentlichen nur noch einen eventuell vorhandenen EMI-Anteil in dem Empfangssignal. Die Selektion des zweiten Signalabschnittes aus dem Empfangssignal erfolgt in analoger Weise wie oben für den ersten Signalabschnitt anhand der Zeilen 3, 4 und 5 in Fig. 2 beschrieben.

Die Auswertung des zweiten Signalabschnitts im Hinblick auf die Größe einer evtl. vorhandenen EMI-Störkomponente wird erleichtert, wenn der Zeitpunkt T2 so gewählt wird, daß er zwischen zwei aufeinanderfolgenden Impulsen, z.B. gemäß Fig. 2, Zeile 3, liegt und die Amplitude dieser empfangenen Impulse zum Zeitpunkt T2 auf Null abgefallen ist. Die Bewertung der Größe der EMI-Störkomponente wird dann nicht durch das Vorhandensein weiterer Störkomponenten erschwert oder verfälscht. Diese Bedingung für T2 ist aus dem im letzten Satz genannten Grund vorteilhaft, aber sie ist nicht zwingend notwendig, weil es auch - wenn auch aufwendige - Verfahren gibt, um Nicht-EMI-Störanteile von EMI-Störanteilen in dem zweiten Signalabschnitt voneinander zu unterscheiden.

Gemäß Fig. 1 liefert die Selektionseinrichtung 230' den ersten und den zweiten Signalabschnitt entsprechend den Zeitpunkten ihrer Selektion zeitlich versetzt an die Auswerteeinrichtung 250'. Diese wertet zunächst die Amplitude und/oder den Signalverlauf des zweiten Signalabschnittes aus und schätzt auf diese Weise die Größe des EMI-Anteils in dem Empfangssignal ab.

Unter der Voraussetzung, daß die EMI-Störung in jedem Falle, auch bei nur kurzzeitiger Einschaltung einer Störungsquelle, länger andauert als mindestens zwei aufeinanderfolgende Impulse, kann davon ausgegangen werden, daß der im zweiten Signalabschnitt registrierte EMI-Anteil auch schon bereits in dem ersten Signalabschnitt vorhanden gewesen ist. Weil, wie oben beschrieben, das Empfangssignal ggf. im wesentlichen durch die EMI und/oder durch ein unerwünschtes Objekt in dem zu überwachenden Raum gestört wird, ermöglicht die Kenntnis der Größe des EMI-Anteils der Störung eine wesentlich zuverlässigere Auswertung des Empfangssignals, d.h. insbesondere des ersten Signalabschnittes durch die Auswerteeinrichtung 250'. Ist die in dem Empfangssignal erkannte Gesamtstörung wesentlich größer als der ermittelte EMI-Anteil, so läßt dies auf einen zusätzlichen Störanteil, verursacht durch ein unerwünschtes Objekt in dem zu überwachenden Raum schließen. Insofern ist also mit der Kenntnis des EMI-Störanteils eine wesentlich zuverlässigere Aussage über das Vorhandensein eines unerwünschten Objektes in dem zu überwachenden Raum möglich.

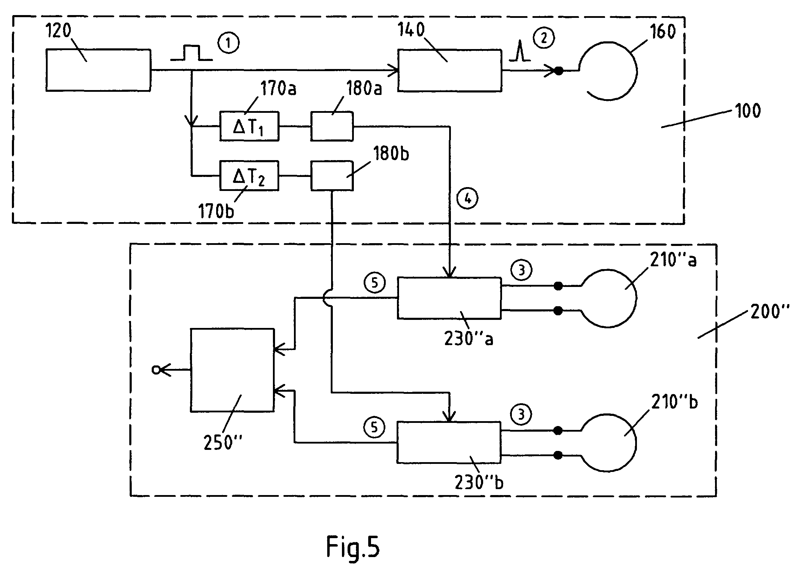

Aufgrund der beschriebenen sehr kleinen Impulsbreite und damit sehr hohen Frequenz der ausgesendeten Impulse gemäß der zweiten Zeile in Fig. 2 erfordert eine Realisierung des Radarsensors gemäß dem ersten Ausführungsbeispiel in Fig. 1 einen erheblichen technischen und finanziellen Aufwand. Dieser Aufwand kann dadurch etwas abgemildert werden, daß der Radarsensor gemäß einem zweiten Ausführungsbeispiel, wie es in Fig. 5 dargestellt ist, realisiert wird.

Im Unterschied zu dem ersten Ausführungsbeispiel zeigt der zweite Radarsensor 200'' gemäß dem zweiten Ausführungsbeispiel einen zweikanaligen Aufbau. Dieser zeigt sich darin, daß insbesondere zwei Selektionseinrichtungen 230''a, 230''b anstelle von nur einer Selektionseinrichtung vorgesehen sind. Dabei wird die erste Selektionseinrichtung 230''a durch das erste Triggersignal des Radarsenders 100 getriggert und selektiert zum Zeitpunkt T1 den ersten Signalabschnitt aus dem Empfangssignal. Weiterhin selektiert die zweite Selektionseinrichtung 230''b, getriggert durch das zweite Triggersignal, den zweiten Signalabschnitt ab der Zeit T2 aus dem Empfangssignal. Durch diese zweikanalige Auslegung der Selektionseinrichtung werden die Anforderungen an die verwendeten Bauelemente erheblich geringer, so daß auf diese Weise Kosten eingespart werden kann. Allerdings entstehen wiederum erhöhte Kosten durch das Vorsehen von zwei Selektionseinrichtungen dieser Art. Wahlweise können den beiden Selektionseinrichtungen 230''a, 230''b jeweils eine eigene Antenne 210''a, 210''b oder alternativ eine Gemeinschaftsantenne 210'' vorgeschaltet sein, welche dann zu den Eingängen der ersten und der zweiten Selektionseinrichtung parallel geschaltet ist.

Die beiden Selektionseinrichtungen 230''a, 230''b liefern die von ihnen jeweils selektierten Signalabschnitte an die Auswerteeinrichtung 250'', welche die Auswertung der Signalabschnitte wie oben beschrieben vornimmt.

An die Bauelemente der im ersten und zweiten Ausführungsbeispiel verwendeten Ausführungseinrichtung 250', 250'' werden sehr hohe Anforderungen gestellt, weil die Auswerteeinrichtung eine Analyse von einzelnen Signalabschnitten des Empfangssignals vorsieht. Um insbesondere den finanziellen Aufwand für die Auswerteeinrichtung zu reduzieren, wird deshalb in einem dritten Ausführungsbeispiel für den dritten Radarsensor 200''' vorgeschlagen, die Auswerteeinrichtung 250''' so auszubilden, daß sie nicht mehr eine Auswertung einzelner Signalabschnitte, sondern statt dessen eine Auswertung von Hüllkurvenabschnitten vornimmt.

Die Auswerteeinrichtung 250''' empfängt jeweils die Ausgangssignale der ersten und zweiten Selektionseinrichtung 230'''a, 230'''b, die jeweils identisch zu den Selektionseinrichtungen 230''a und 230''b des zweiten Radarsensors aufgebaut sind. Jeweils eines dieser Ausgangssignale ist in der rechten Abbildung in der 5. Zeile in Fig. 2 dargestellt. Die Ausgangssignale am Ausgang der ersten und zweiten Selektionseinrichtung unterscheiden sich lediglich dadurch, daß sie zeitlich um die Zeit T2 - T1 versetzt sind und jeweils andere Amplitudenwerte aufweisen.

In der Abtasteinrichtung 250''' werden diese Signale jeweils von einem individuell zugeordneten Filter 252'''a, 252'''b tiefpaßgefiltert, so daß am Ausgang der beiden Filter jeweils eine Hüllkurve der an ihren Eingängen anliegenden Abtastsignale anliegt. Ein Beispiel für eine derartige Hüllkurve ist in Zeile 6 von Fig. 2 oder in Fig. 7 dargestellt.

Die beiden Hüllkurven werden durch individuell den Filtern nachgeschaltete Analogdigitalwandler 254'''a, 254'''b analog digital gewandelt und nachfolgend einem Mikroprozessor 256 als Eingangssignale zugeführt.

Da es sich bei der Hüllkurve um ein Tiefpaßsignal handelt, kann es gemäß dem Nyquistkriterium mit einer wesentlich geringeren Abtastrate abgetastet werden als z.B. mit der Sendefrequenz, mit welcher einzelne Impulse an der Sendeantenne 160 ausgesendet werden. Dies hat wiederum den Vorteil, daß langsamere und damit billigere Schaltungen verwendet werden können. Der Mikroprozesor 256''' wertet die Abtastwerte der Hüllkurve nach Maßgabe durch einen vorgegebenen Auswertealgorithmus aus, wobei die Auswertung insbesondere auf Basis von Amplitudenwerten und/oder zeitlich begrenzten Verläufen der Hüllkurven basiert.

Analog zu dem zweiten Ausführungsbeispiel des Radarsensors repräsentiert das Ausgangssignal der zweiten Selektionseinrichtung 230'''b und damit auch die zweite Hüllkurve am Ausgang des Filters 252'''b im wesentlichen den EMI-Anteil in dem Empfangssignal. Mit der Kenntnis dieses Anteils wird die Auswertung der ersten Hüllkurve durch den Mikroprozessor 256''' im Hinblick auf das Vorhandensein eines unerwünschten Objektes in dem zu überwachenden Raum wesentlich zuverlässiger möglich.

Der Mikroprozessor 256''' führt die Auswertung der beiden Hüllkurven auf Basis eines programmierten Algorithmusses aus, wobei der Algorithmus entweder einen Vergleich von abgetasteten Amplitudenwerten der Hüllkurven mit vorgegebenen Schwellenwerten oder eine Analyse des Verlaufs eines begrenzten Abschnittes der Hüllkurven vorsieht. Die Grenzfrequenzen der Filter 252'''a und 252'''b liegen oberhalb von typischerweise 10 bis 20 Hz, welches der Bewegungsfrequenz von schnellen, unerwünschten Objekten in dem zu überwachenden Raum entspricht. Das Vorhandensein einer derartigen Bewegung, insbesondere das Hineinreichen einer Hand in den Innenraum eines Fahrzeugs wird deshalb in jedem Fall noch durch eine Veränderung der Amplitude oder des Verlaufs der Hüllkurve erkennbar; ein Beispiel für eine derartige Hüllkurve zeigt Fig. 7.

Bei einer Verwendung des erfindungsgemäßen Radarsystems im Fahrzeug wird dieses von der Autobatterie gespeist. Um eine zu starke Entladung der Batterie durch das System zu sein. Dazu bieten sich bei der vorliegenden Erfindung verschiedene Ansätze an.

Zum einen ist es denkbar, die Periodendauer der ausgesendeten Impulse zu verringern, so daß also weniger Impulse pro Zeiteinheit gesendet werden. Auch ist es denkbar, nur zeitweise einzelne Impulse oder Impulsbündel auszusenden.

Auf diese Weise wird die Empfindlichkeit des Systems zugunsten eines verminderten Stromverbrauchs reduziert.

Es ist anzunehmen, daß das erfindungsgemäße Radarüberwachungssystem bei Verwendung zur Überwachung des Innenraums eines Fahrzeugs in der täglichen Praxis während eines weitaus größten Teils einer Einschaltzeit kein unerwünschtes Objekt in den zu überwachenden Raum detektiert. Aus Energiespargründen wäre es deshalb vorteilhaft, wenn der zweite Kanal, d.h. die Selektion der EMI-Störkomponente nur dann aktiviert wird, wenn eine Vorauswertung des ersten Signalabschnittes bzw. der ersten Hüllkurve Anzeichen für das Vorhandensein eines unerwünschten Objektes liefert.

Das erfindungsgemäße Radarsystem eignet sich nicht nur zur Überwachung des Innenraums eines Fahrzeugs, sondern kann vielmehr auch zu einer Überwachung von dessen Außenraum eingesetzt werden. Dies gilt insbesondere deshalb, weil, wie oben erwähnt, die ausgesendete Radarstrahlung die Fensterscheiben eines Fahrzeugs durchdringt. Für die Überwachung des Fahrzeugraumes wäre lediglich eine Vergrößerung der Zeiten T1 und T2 und damit eine Vergrößerung der Shell-Radien R1 und R2 erforderlich. Bewegungen von Objekten innerhalb dieser vergrößerten Radien um den Radarsensor herum würden dann erkennbar. Auf diese Weise würde z.B. die Annäherung eines Objektes, insbesondere eines Menschen, an ein Fahrzeug bereits erkennbar, bevor ein Eindringen in den Innenraum des Fahrzeugs stattfindet.

**Patentansprüche**

1. Radarsensor (200') zum Überwachen eines Raumes, insbesondere des Innenraumes eines Fahrzeugs, mit:

   einer Antenne (210') zum Empfangen eines Empfangssignals, welches mindestens einen ausgesendeten Impuls nach dessen Reflexion in dem zu überwachenden Raum repräsentiert;

   einer Selektionseinrichtung (230') zum Selektieren eines ersten Signalabschnittes aus dem Empfangssignal beginnend ab einer Zeit T1, zu welcher der Empfang des Impulses nach dessen Aussendung erwartet wird; und

   einer Auswerteeinrichtung (250') zum Auswerten des ersten Signalabschnitts daraufhin, ob er eine Störung aufgrund eines Objektes in dem Raum aufweist;
   **dadurch gekennzeichnet, daß**

   die Selektionseinrichtung (230') weiterhin ab einer Zeit T2 mit T2 > T1 nach dem Aussenden des Impulses einen zweiten Signalabschnitt aus dem Empfangssignal selektiert, welcher im wesentlichen nur noch einen durch elektromagnetische Interferenz hervorgerufenen EMI-Anteil in dem Empfangssignal repräsentiert; und

   die Auswerteeinrichtung (250') weiterhin durch Auswerten des zweiten Signalabschnitts die Größe des EMI-Anteils in dem Empfangssignal abschätzt und unter Berücksichtigung der Größe des EMI-Anteils die Auswertung des ersten Signalabschnitts durchführt.

2. Radarsensor (200') nach Anspruch 1,
   **dadurch gekennzeichnet, daß** T2 so gewählt ist, daß zu dieser Zeit der Empfang des Impulses durch den Radarsensor (200') beendet ist, aber der Empfang eines nachfolgenden Impulses noch nicht begonnen hat.

3. Radarsensor (200') nach Anspruch 1 oder 2,
   **dadurch gekennzeichnet, daß** die Auswerteeinrichtung (250') zum Bestimmen der Größe des EMI-Anteils die mittlere Amplitude und/oder den Verlauf des zweiten Signalabschnitts auswertet.

4. Radarsensor (200') nach Anspruch 3,
   **dadurch gekennzeichnet, daß** die Auswerteeinrichtung (250') die mittlere Amplitude des zweiten Signalabschnitts mit einem vorbestimmten Schwellenwert vergleicht.

**5.** Radarsensor (200') nach einem der vorangegangenen Ansprüche, **dadurch gekennzeichnet, daß** die Dauer des ersten oder zweiten Signalabschnitts in Grenzen variabel ist.

**6.** Radarsensor (200'') zum Überwachen eines Raumes, insbesondere des Innenraumes eines Fahrzeugs, mit:

mindestens einer Antenne (210''a, 210''b) zum Empfangen eines Empfangssignals, welches mindestens einen ausgesendeten Impuls nach dessen Reflexion in dem zu überwachenden Raum repräsentiert, und

einer ersten Selektionseinrichtung (230''a) zum Selektieren eines ersten Signalabschnittes aus dem Empfangssignal beginnend ab einer Zeit T1, zu welcher der Empfang des Impulses nach dessen Aussendung erwartet wird; und

einer Auswerteeinrichtung (250'') zum Auswerten des ersten Signalabschnitts daraufhin, ob er eine Störung aufgrund eines Objektes in dem Raum aufweist;
**dadurch gekennzeichnet, daß**

eine zweite Selektionseinrichtung (230''b) ab einer Zeit T2 mit T2 > T1 nach dem Aussenden des Impulses einen zweiten Signalabschnitt aus dem Empfangssignal selektiert, welcher im wesentlichen nur noch einen durch elektromagnetische Interferenz hervorgerufenen EMI-Anteil im Empfangssignal repräsentiert; und

die Auswerteeinrichtung (250') durch Auswerten des zweiten Signalabschnitts die Größe des EMI-Anteils in dem Empfangssignal abschätzt und unter Berücksichtigung dieser Größe die Auswertung des ersten Signalabschnitts vornimmt.

**7.** Radarsensor (200'') nach Anspruch 6,
**dadurch gekennzeichnet, daß** T2 so gewählt ist, daß zu dieser Zeit der Empfang des Impulses durch den Radarsensor (200'') beendet ist, aber der Empfang eines nachfolgenden Impulses noch nicht begonnen hat.

**8.** Radarsensor (200'') nach Anspruch 6 oder 7,
**dadurch gekennzeichnet, daß** der ersten und der zweiten Selektionseinrichtung (230''a, 230''b) jeweils eine eigene Antenne (210''a, 210''b) vorgeschaltet ist, und daß beide Antennen aber das gleiche Empfangssignal empfangen.

**9.** Radarsensor (200'') nach einem der

vorangegangenen Ansprüche, **dadurch gekennzeichnet, daß** die Auswerteeinrichtung (250'') die Amplitude und/oder den Verlauf des ersten und zweiten Signalabschnitts auswertet.

**10.** Radarsensor (200'') nach Anspruch 9,
**dadurch gekennzeichnet, daß** die Auswerteeinrichtung (250'') die mittlere Amplitude eines der Signalabschnitte mit einem Schwellenwert vergleicht.

**11.** Radarsensor (200''') zum Überwachen eines Raumes, insbesondere des Innenraumes eines Fahrzeuges, mit:

mindestens einer Antenne (210'''a, 210'''b) zum Empfangen eines analogen Empfangssignals, welches eine hochfrequente Impulsfolge $n_1$... $n_i$ ...$n_k$ mit der Periodendauer T nach deren Aussendung und Reflektion in dem zu überwachenden Raum repräsentiert,

einer ersten Selektionseinrichtung (230'''a) zum Erzeugen eines hochfrequenten ersten Abtastsignals durch Abtasten des Empfangssignal zu Zeitpunkten T1i, zu welchen jeweils der Empfang des Impulses $n_i$ der Impulsfolge erwartet wird; und

einer Auswerteeinrichung (250''') zum Bilden einer Hüllkurve des ersten Abtastsignals und Auswerten der Hüllkurve im Hinblick darauf, ob sie Störungen aufweist, die auf ein Objekt in dem zu überwachenden Raum zurückgehen;
**gekennzeichnet durch**

eine zweite Selektionseinrichtung (230'''b) zum Erzeugen eines hochfrequenten zweiten Abtastsignals auf Basis von Abtastzeitpunkten T2i > T1i, wobei das zweite Abtastsignal im wesentlichen nur einen durch elektromagnetische Interferenz hervorgerufenen EMI-Anteil in dem Empfangssignal repräsentiert, und
wobei die Auswerteeinrichtung (250''') die Hüllkurve des zweiten Abtastsignals bildet, anhand dieser die Größe des EMI-Anteils in dem Empfangssignal abschätzt und das erste Abtastsignal unter Berücksichtigung der Größe des EMI-Anteils auswertet.

**12.** Radarsensor (200''') nach Anspruch 11,
**dadurch gekennzeichnet, daß** T1i und T2i beide innerhalb einer Periode T zwischen zwei aufeinanderfolgenden Impulsen liegen und daß der Empfang des Impulses $n_i$ durch den Radarsensor (200''') zum Zeitpunkt T2i beendet ist, aber der Empfang eines nachfolgenden Impulses $n_{i+1}$ der Impulsfolge noch nicht begonnen hat.

**13.** Radarsensor (200''') nach Anspruch 11 oder 12,
**dadurch gekennzeichnet, daß**

die Auswerteeinrichtung (250''') einen Mikroprozessor (256''') zum Auswerten der Abtastwerte der beiden Hüllkurven nach einem vorbestimmten Algorithmus aufweist.

**14.** Radarsensor (200''') nach Anspruch 13,
**dadurch gekennzeichnet, daß** der Algorithmus einen Vergleich der Amplitude eines einzelnen Abtastwertes der Hüllkurve von mindestens einem der beiden Signalabschnitte mit einem vorgegebenen Schwellenwert oder eine Auswertung eines lokalen Verlaufs der Hüllkurve von mindestens einem der beiden Signalabschnitte auf Basis mehrerer Abtastwerte vorsieht.

**15.** Radarsystem zum Überwachen eines Raumes, insbesondere des Innenraumes eines Fahrzeugs, mit:

einem Radarsender (100) zum Aussenden mindestens eines Impulses über eine Sendeantenne (160) in den zu überwachenden Raum, und

einem Radarsensor (200', 200'', 200''') nach einem der Ansprüche 1-14.

**16.** Radarsystem nach Anspruch 15,
**dadurch gekennzeichnet, daß** der Radarsender (100) einen Pulsgenerator (120) zum Erzeugen von mindestens einem Gatterimpuls und einen Nadelimpulsgenerator (140) zum Erzeugen von Nadelimpulsen nach Maßgabe durch den Gatterimpuls aufweist, wobei die Nadelimpulse über die Sendeantenne (160) ausgesendet werden.

**17.** Radarsystem nach Anspruch 15 oder 16,
**dadurch gekennzeichnet, daß** das Radarsystem

eine erste Verzögerungseinrichtung (170a) aufweist, welche eine erste Triggereinrichtung (180a) zum Ausgeben eines ersten Triggerimpulses an die erste Selektions- oder Abtasteinrichtung (230'a, 230''a, 230'''a) zur Zeit T1 nach dem Aussenden jeden Gatterimpulses veranlaßt, und

eine zweite Verzögerungseinrichtung (170b) aufweist, welche eine zweite Triggereinrichtung (180b) zum Ausgeben eines zweiten Triggerimpulses an die zweite Selektions- oder zweite Abtasteinrichtung (230'b, 230''b, 230'''b) zur Zeit T2 mit T2 > T1 nach dem Aussenden jeden Gatterimpulses veranlaßt.

Fig.1

EP 1 031 853 A2

EP 1 031 853 A2

R1

MW-Sensor

**Fig. 3**

R2

**Fig. 4**

Schutzhülle mit variablem Radius

RANGE = 1 FOOT

128
77
26
-25
-76
-127

8    285    489    614    818    1823

HAND
MOTION

IN          OUT          2 SECONDS

**Fig. 7**

**Fig. 2**

Fig.5

Fig.6